# EUROPEAN PATENT SPECIFICATION

(11) **EP 1 919 295 B1**
(45) Date of publication and mention of the grant of the patent: **18.12.2013**
(21) Application number: 06789078.0
(22) Date of filing: 01.08.2006
(51) Int. Cl.: A23G 1/00, A23G 3/00, A61K 9/28

(54) **COATED CHEWABLE CONFECTION**
BESCHICHTETES KAUBARES KONFEKT
CONFISERIE A MACHER ENROBEE

(30) Priority: 02.08.2005 US 704704 P
(43) Date of publication of application: 14.05.2008
(73) Proprietor: Intercontinental Great Brands LLC, East Hanover, NJ 07936 (US)
(72) Inventor: ROBINSON, Mary, K., Sparta, NJ 07871 (US)
(74) Representative: Wilson Gunn
(86) International application number: PCT/US2006/029891
(87) International publication number: WO 2007/016549

(56) References cited:
- WO-A1-02/49453
- US-A- 4 485 118
- US-A- 4 789 546
- US-A- 4 847 090
- US-A- 4 948 595
- US-A- 5 284 659
- US-A- 5 284 659
- US-A1- 2003 049 360
- US-A1- 2004 156 794
- US-A1- 2005 112 235
- US-B1- 6 355 228

## Description

### FIELD

The present invention includes confectionery products that may provide separate and distinct textures and hardness levels in different segments of the product. More specifically, the products may include a dissolvable or chewy core, such as a tablet or candy core, and a hard, crunchy or soft candy coating. Each segment also may include a different flavor, thereby providing a sequential release of different flavors when orally consumed by an individual. The present invention also provides methods for preparing such confectionery products and methods of sequentially releasing flavors in the oral cavity of an individual.

### BACKGROUND

Pressed tablet confectioneries have been provided in a variety of different flavors. In some instances, dual flavors have been incorporated together into a pressed tablet core or in multiple pressed layers. Such tablets provide multiple flavors in a tablet form where the texture and mouthfeel is substantially homogenous. For example, multi-layered pressed tablets provide the perception of an overall single texture in the mouth, as well as a simultaneous release of flavors during consumption by an individual user. Prior confectionery tablets not only failed to provide multi-textured formats, but also lacked the ability to provide a sequential flavor release profile, at least a portion of which is attributable to the different compositional makeup and hardness levels.

More particularly, certain flavor profiles, such as combinations of fruit and mint flavors, may be more enjoyable to an individual user when released sequentially in the mouth. For example, an individual user may prefer experiencing a fruity taste first and, later, a breath freshening taste of a mint flavor. If released simultaneously, the individual flavors may be obscured. Currently known pressed tablet configurations, however, are not adapted to provide such a sequential flavor delivery.

US 5284659 A discloses a confectionery compressed tablet designed to dissolve in the oral cavity and containing a flavor ingredient intimately bound with a bioadhesive. The flavor and bioadhesive composition provide a unique mouthfeel so that as the confection dissolves in the oral cavity, a coating of flavor adheres to the moist areas of the oral cavity. There is also provided a confectionery compressed tablet characterized by a single product body with discrete phases contained therein which act to provide timed release of at least one flavor ingredient sequentially. A flavor and bioadhesive mixture can be prepared with a hydrophilic delivery system providing rapid initial delivery of the flavor and unique mouthfeel or as a part of a hydrophobic delivery system providing extended periods of flavor delivery and unique mouthfeel.

WO 02/49453 A1 discloses a method of delivering flavored comestibles to a consumer in which a plurality of vehicles for the flavor is provided and the consumer ingests a plurality of the vehicles simultaneously, and where there are two or more such vehicles, each containing a flavor which is different from each of the other flavors. The nature of and the amount of the flavors in each individual vehicle is such that, when a mixture of the said different vehicles are ingested. In one or more particular proportions or ranges of proportions, a recognisable flavor different to any of the individual flavors is sensed by the consumer at least during part of the period that the vehicle are in the consumers mouth.

US 4789546 A discloses a multiple-layer edible tablet which contains a combination of different ingredients in separate layers wherein ingredients in one of the layers exhibits distinct organoleptic characteristics such as being perceived as cooling in contrast to the distinct organoleptic characteristics exhibited by the ingredients is another of the layers of the tablet such as being perceived as warming to enable the separate layers of the tablet to be identified when the tablet is being consumed by a user.

US 4847090 A discloses a confection piece having two or more discrete parts, each part being different from another in respect of at least one of its physical and/or chemical properties such as in respect of at least one or a combination of its coloration, material composition or texture. The confection piece can be used to combine diverse confections to provide new and unique organoleptic response for the user and it also can be used as a vehicle for oral administration of nutrients and medicinal compositions and particularly where same include interactive components which should be kept separated until the confection piece is dissolved in the user's mouth.

Therefore, there is a need for chewable tablets that can provide separate and distinct textures and hardness levels, as well as a sequential release of different flavors. The distinct textures may impart varied sensations throughout consumption by an individual user, particularly as the chew residence time in the mouth increases, or as the user alternates between chewing and permitting slow dissolution of the product in the mouth. Moreover, the different flavors incorporated into the separate and distinct segments of the product may be complimentary, yet more enjoyably consumed when released sequentially from the product.

### SUMMARY

In some embodiments, there is provided a chewable confectionery product comprising: (a) a pressed dissolvable tablet core or chewable candy core, wherein said core comprises a first flavor; and (b) a coating surrounding the tablet core, said coating being provided by applying a coating material to said core, followed by drying, comprising a second flavour, wherein said first flavor is different from said second flavour, characterised in that the core and the coating comprise different hardness and different density levels.

In some embodiments, said coating comprises a third flavour, wherein said first flavor is different from said second flavor and said third flavor.

Some embodiments provide a sequential flavor delivery system comprising: (a) a pressed dissolvable tablet core or a chewable candy core, said core comprising: (i) at least one sugarless bulk sweetener; (ii) at least one intense sweetener; (iii) a first flavor selected from the group consisting of fruit, cinnamon and mint flavors; and (iv) a lubricant; and (b) a coating surrounding said pressed dissolvable tablet core or chewable candy core, said coating being provided by applying a coating material to said core, followed by drying the coating and said coating comprising: (i) at least one sugarless bulk sweetener; (ii) at least one intense sweetener; (iii) a coloring agent; and (iv) a second flavor selected from the group consisting of fruit, cinnamon and mint flavors, wherein said first flavor is different from said second flavour, characterised in that the core and the coating comprise different hardness and different density levels. The dissolvable pressed tablet core desirably has a moisture content of less than about 1%.

In some embodiments, there is provided a method of providing a sequential flavor release in the oral cavity of an individual, which includes the steps of: (a) providing a confectionery product comprising: (i) a pressed dissolvable comprising a first flavor; and (ii) a coating surrounding said pressed dissolvable core, said coating being provided by applying a coating material to said core, followed by drying the coating and said coating comprising a second flavor, wherein said first flavor is different from said second flavour, characterised in that the core and the coating comprise different hardness and different density levels; (b) applying the product into the oral cavity of the individual; (c) allowing the coating to dissolve and release the second flavor into the oral cavity of the individual; and (d) subsequently allowing the core to dissolve and release the first flavor into the oral cavity of the individual.

In some embodiments, there is provided a method of preparing a chewable confectionery product, comprising the steps of: (a) providing a particulate bulk sweetener; (b) mixing the particulate bulk sweetener with a first flavour to a mixture; (c) punching or pressing the mixture to form a pressed tablet core; and (d) applying one or more layers of a coating material onto the tablet core, wherein the coating material comprises a second flavor, wherein the first flavor is different from the second flavour, characterised in that the core and the coating comprise different hardness and different density levels.

### DETAILED DESCRIPTION

As used herein the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

The term "food-grade acid," as used herein, encompasses any acid that is acceptable for use in edible compositions.

As will be described in detail herein, embodiments of the present invention relate to confectionery products that contain different flavors in different textured segments of the product. More specifically, some embodiments provide chewable confectionery products, which have at least two separate and distinct segments, i.e., a hard or soft coating, or shell, surrounding a chewable tablet or candy core. The core may be a friable, pressed tablet core having a low moisture content. The core may also be a chewy candy such as a nougat. The hard or soft coating may have a smooth surface provided by a plurality of coating solution layers. In some embodiments, the coating has a thickness sufficient to impart a crunchy coating, substantially similar to those surrounding pellet chewing gums. The hard or soft coating contains at least one different flavor from the chewable core.

The flavors in the coating and the chewable core may be different but from the same flavor category. For example, two different mint flavors, such as two different peppermint extracts or peppermint and spearmint flavors may be employed, with at least one in the chewable core and at least one in the coating. Two different fruit flavors, spicy flavors or vanilla flavors similarly may be used respectively in the coating and chewable core.

In some embodiments, the flavors in the coating and chewable core may be from different flavor categories. For example, the following different combinations may be used: a fruit flavor and a mint flavor; a fruit flavor and a vanilla flavor; a fruit flavor and a spicy flavor; a mint flavor and a vanilla flavor; a mint flavor and a spicy flavor; or a vanilla flavor and a spicy flavor. The choice of segment, i.e. coating or core. in which to incorporate the different flavors in the selected flavor combination may depend on the desired flavor release profile, i.e., which flavor is intended to be perceived initially and sequentially. Multiple flavors may be incorporated into each segment.

The chewable confectionery product may be entirely consumed, i.e., dissolvable in the mouth. This type of product therefore is distinctly different from chewing gum pellet products having a crunchy coating. The individual compositional formats, which are present in the distinct segments of the confectionery product, may contain predominant amounts of water-soluble ingredients, such as sweeteners, which carry and aid in the release of flavors and other components. The distinct segments may have different hardness levels and different density levels. These characteristics may be used to design and alter the flavor release profiles. Thus, the different compositional make-up, hardness and density levels and segment location, i.e., core versus coating, may contribute to the flavor release profile, texture and mouthfeel sensations and overall consumer experience.

Accordingly, upon consumption, the confectionery product may impart a varied mouthfeel as the individual user perceives the different textures of the product and as the coating and core textures co-mingle in the mouth. Moreover, the individual user may experience a sequential flavor profile with the flavor(s) in the coating first and, subsequently, the different flavor(s) in the core.

### Chewable Confectionery Products

As mentioned above, embodiments described herein provide chewable confectionery products, which are entirely consumable. The chewable confectionery product may include at least two separate and distinct segments: a dissolvable tablet core and a coating surrounding the core. The core may contain a first flavor, while the coating contains a second and different flavor. The two flavors may be complementary or vastly different. Additional embodiments may have a third flavor in the coating which is different from the first flavor. The two flavors may be complementary or vastly different.

Other embodiments of chewable confectionery products may include a chewable candy core and a coating surrounding the core. The core may contain a first flavor, while the coating contains a second and different flavor. The two flavors may be complementary or vastly different. Additional embodiments may have a third flavor in the coating which is different from the first flavor. The two flavors may be complementary or vastly different.

In accordance with some embodiments, the core of the confectionery product may be a pressed tablet. Alternatively. In some embodiments, the core may be any other form of tablet, such as an extruded tablet, molded tablet or any combination thereof. In some embodiments, the core may be water-soluble, particularly a water-soluble pressed tablet. The moisture content of the core may vary, but may have a moisture content of 1% or less. In addition, the core may have a hardness of at least about 10 KPU. In some embodiments, the core may be about 5% to about 95% by weight of the total confectionery product. In other embodiments, the core may be about 15% to 75% by weight. In addition to the first flavor, the core may include at least one bulk sweetener, such as a sugar sweetener and/or sugarless bulk sweetener. In pressed tablet embodiments, the bulk sweetener may be in a particulate form, such as a powder.

In some embodiments, the core of the confectionery product may be a chewy candy. Suitable chewy candies can include, but are not limited to, nougats, toffees, taffies, gummies, and jellies. In addition to the first flavor, the core may include at least one bulk sweetener, such as a sugar sweetener and/or sugarless bulk sweetener.

The coating, or shell, of the confectionery product may at least substantially surround, or enrobe, the core. In some embodiments, the coating may wholly surround the core. The coating may be about 5% to about 95% by weight of the total confectionery product. In other embodiments the core may be about 25% to about 85% by weight of the total confectionery product. In addition to the second flavor, the coating of the confectionery product also may contain at least one bulk sweetener. The bulk sweetener may be a sugar sweetener and/or sugarless bulk sweetener.

In addition to the unique attributes due to different flavor release profiles in the coating and the core, the crunchiness of the coating juxtaposed with the smoother chew of the core, can provide a unique sensory experience.

In some embodiments, an individual chewable confectionery product may weigh about 0.2 g to about 6 grams (g).

As mentioned above, the core and coating of the confectionery product each may include at least one different flavor. Any combination of flavors in the coating and core may be used to provide any desired flavor profile. Upon consumption, the initial flavor impact may be the coating flavor, the core flavor or a combination of both flavors. For instance. In some embodiments, the individual user may sequentially experience the different flavors upon consumption of the product. In particular, the individual user may experience the flavor in the coating first and, as the coating dissolves, experience the different flavor in the core. In some embodiments, the individual user may experience both flavors together as they chew and consume the product. The flavors may combine in the individual user's mouth to provide an enhanced flavor perception or flavor extension of one or both of the flavors. In some embodiments, different flavors can be included in different layers of the coating. Having different flavors in different levels of the coating can create flavor experiences such as where the individual user experiences more than one flavor as the coating dissolves and experiences yet another flavor in the core. Alternatively, the various flavors in both the coating layers and core can combine upon chewing for a combinatorial experience.

Compounds that provide flavor (flavorings or flavor agents), which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bay leaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with cooling agents.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavor may be employed in either liquid form and/or dried form. When employed in the latter form, suitable drying means such as spray drying the liquid may be used. Alternatively, the flavor may be absorbed onto water soluble materials, such as cellulose, starch, sugar, maltodextrin, gum arabic and so forth or may be encapsulated. The actual techniques for preparing such dried forms are well-known.

In some embodiments, the flavor may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

The amount of flavor employed herein may be a matter of preference subject to such factors as the individual flavor, the carrier employed, and the strength of flavor desired. Thus, the amount of flavoring may be varied in order to obtain the result desired in the final product.

In general, the flavors are present in amounts of about 0.02% to about 15%, and more specifically from about 0.05 % to about 3%, and even more specifically, from about 0.50 % to about 1.8%, by weight of the product.

As discussed above, the flavors may be selected to provide any desired flavor profile. In some embodiments, the flavor in the coating or the core may be dominant as compared to the other flavor, or. In some embodiments, the flavors may equally complement one another. Some embodiments may include flavors from the same flavor category, such as two different mint flavors, to provide an extended flavor perception. In other embodiments, flavors maybe selected from different flavor categories, such as a combination of fruit and mint flavors or a combination of cinnamon and mint flavors. For example, the flavor in the coating, i.e., the second flavor, may be a fruit flavor, whereas the flavor in the core, i.e., the first flavor, may be a mint flavor. Such embodiments may first deliver a fruity taste as the coating dissolves, while subsequently delivering a refreshing taste as the individual user consumes the mint-flavored core. In some embodiments, the opposite flavor profile may be employed, i.e., mint flavor in the coating and fruit flavor in the core.

The core and coating may also each contain bulk sweeteners, as mentioned above. Suitable sugar sweeteners for use in the core and/or coating generally include monosaccharides, di-saccharides and poly-saccharides such as but not limited to, sucrose (sugar), dextrose, maltose, dextrin, xylose, ribose, glucose, mannose, galactose, fructose (levulose), lactose. invert sugar, fructo oligo saccharide syrups, partially hydrolyzed starch, corn syrup solids and mixtures thereof.

Suitable sugarless bulk sweeteners for use in the core and/or coating include sugar alcohols (or polyols) such as, but not limited to, sorbitol, xylitol, mannitol, galactitol, maltitol, hydrogenated isomaltulose (isomalt), lactitol, erythritol, hydrogenated starch hydrolysate, stevia and mixtures thereof.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomelic, dimeric, and polymeric saccharides. The ratios of these different saccharides give different hydrogenated starch hydrolysates different properties. Mixtures of hydrogenated starch hydrolysates, such as LYCASIN<(R)>, a commercially available product manufactured by Roquette Freres of France, and HYSTAR<(R)>, a commercially available product manufactured by SPI Polyols, hie. of New Castle, Delaware, are also useful.

In some embodiments, the confectionery product may be a sugared product. In such embodiments, the core and the coating both may contain sugar sweeteners, as provided above. The sugar sweeteners may be the same or different. In other embodiments, the confectionery product may be a sugar-free product in which the core and coating both may contain sugarless bulk sweeteners, as provided above. The sugarless bulk sweeteners may be the same or different. Other embodiments provide for a core and/or coating with a hybrid combination of sugar sweetener and a sugarless bulk sweetener. Still other embodiments may provide a hybrid product in which the core and coating contain different bulk sweeteners. For instance, the core may include a sugar sweetener and the coating a sugarless bulk sweetener or vice-versa.

In some embodiments, high-intensity sweeteners may be used. Without being limited to particular sweeteners, representative categories and examples include:
(a) water-soluble sweetening agents such as dihydrochalcones, monellin, stevia, steviosides, rebaudioside A, glycyrrbizin, dihydroflavenol, and sugar alcohols such as sorbitol, mannitol, maltitol, xylitol, erythritol and L-aminodicarboxylic acid aminoalkenoic acid ester amides, such as those disclosed in U.S. Pat. No. 4,619,834, which disclosure is incorporated herein by reference, and mixtures thereof;
(b) water-soluble artificial sweeteners such as soluble saccharin salts, i.e., sodium or calcium saccharin salts, cyclamate salts, the sodium, ammonium or calcium salt of 3,4- dihydro-6-methyl-1,2,3-oxathiazine-4-one-2,2-dioxide5 the potassium salt of 3,4-dihydro-6- methyl-1,2,3-oxathiazine-4∼one∼2,2-dioxide (Acesulfatne-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L∼aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl- 1 -chloro-1-deoxy-beta-D-fructo-f-ura[alpha]oside, or 4, 1 '-dichloro-4, 1 '- dideoxygalactosucrose; 1 ',6'-dichloro 1 ',6'-dideoxysucrose; 4-chloro-4-deoxy-alpha-D-galactopyranosyl-1^-dichloro-lj[beta]-dideoxy-beta-D- fructofuranoside, or 4,1',6'-trichloro- 4, 1 j[omicron]'-trideoxygalactosucrose; 4,6-dichloro-4,6-dideoxy-alpha-D-galactopyranosyl-6-chloro- 6-deoxy-beta-D- fructofuranoside, or 4,6,6'-trichloro-4,6,6'-trideoxygalactosucrose; 6,V,&- trichloro-6,1',6'-trideoxysucrose; 4,6-dichloro-4,6-dideoxy-alpha-D-galacto-pyranosyl-156- dichloro-1,6-dideox y-beta-D-fructofuranoside, or 4,6,r,6'-tetracliloro4,6,r,6'-tetradeoxygalacto-sucrose; and 4,6,1',6'-tetradeoxy-sucrose, and mixtures thereof;
(e) protein based sweeteners such as thaumatococcus danielli (Thaumatin I and II) and talin;
(f) the sweetener monatin (2-hydroxy-2-(indol-3-ylmethyl)-4-aminoglutaric acid) and its derivatives; and
(g) the sweetener Lo han guo (sometimes also referred to as "Lo han kuo").

In some embodiments, hydrophobic sweeteners such as those disclosed in U.S. Pat. No. 7,025,999, and mixtures thereof, may be used. For example, such hydrophobic sweeteners include those of the formulae I-XI as set forth below: 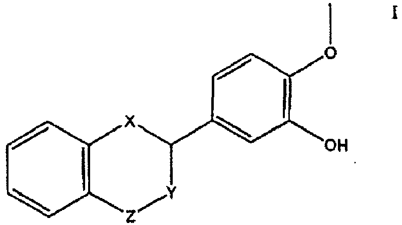 wherein X, Y and Z are selected from the group consisting of CH2, O and S; 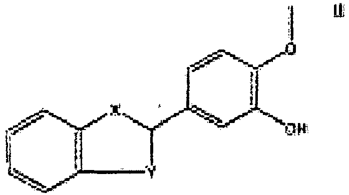 wherein X and Y are selected from the group consisting of S and O; 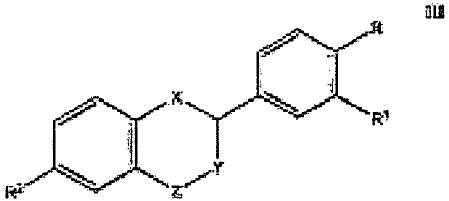 wherein X is S or O; Y is O or CH₂; Z is CH₂, SO₂ or S; R is OCH₃, OH or H; R¹ is SH or OH and R² is H or OH; 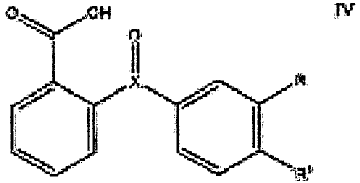 wherein X is C or S; R is OH or H and R¹ is OCH₃ or OH; 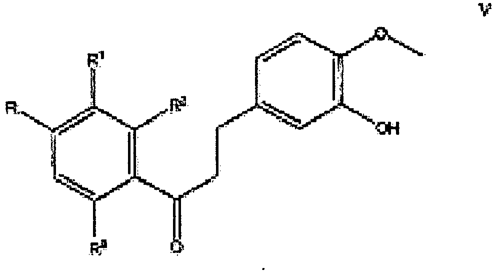 wherein R, R² and R³ are OH or H and R¹ is H or COOH; 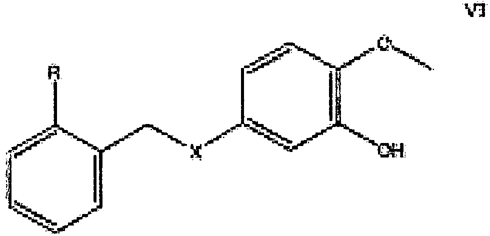 wherein X is O or CH₂ and R is COOH or H; 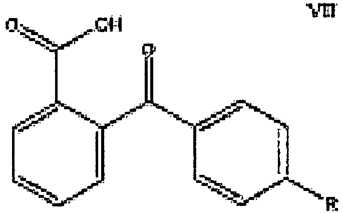 wherein R is CH₃CH₂, OH, N (CH3)₂ or Cl; 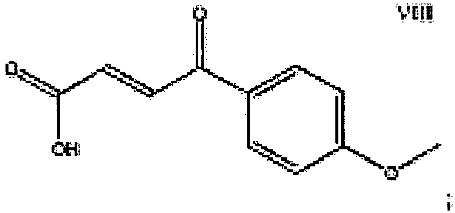 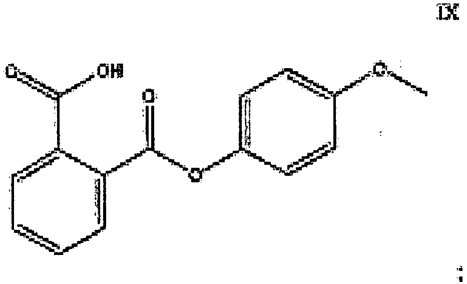 wherein X is O or CH₂ and R is COOH or H; 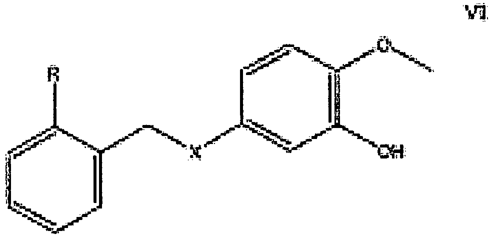 wherein X is O or CH₂ and R is COOH or H; 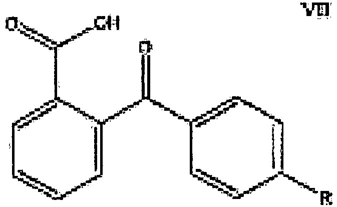 wherein R is CH₃CH₂, OH, N (CH3)₂ or Cl; 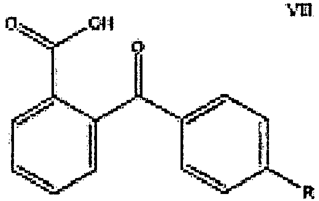 wherein R is CH₃CH₂, OH, N(CH3)₂ or Cl; 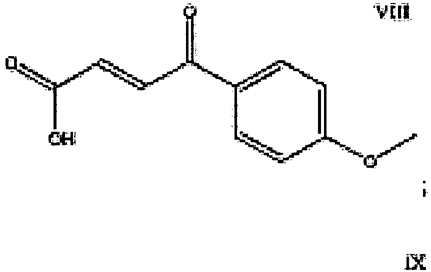 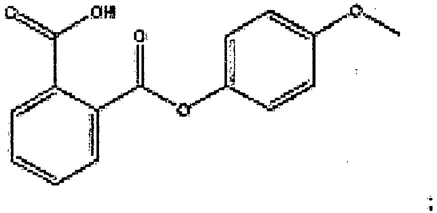 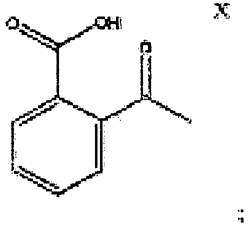 and

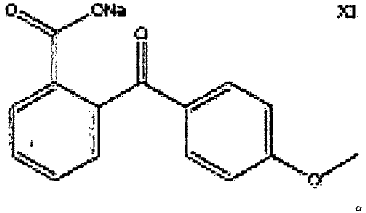

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

In general, an effective amount of intense sweetener may be utilized to provide the level of sweetness desired, and this amount may vary with the sweetener selected. The intense sweetener may be present in amounts from about 0.001% to about 3%, by weight of the product, depending upon the sweetener or combination of sweeteners used. The exact range of amounts for each type of sweetener may be selected by those skilled in the art.

In some embodiments, examples of suitable potentiators, also known as taste potentiators include, but are not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), sugar acids, potassium chloride, sodium acid sulfate, hydro lyzed vegetable proteins, hydrolyzed animal proteins, yeast extracts, adenosine monophosphate (AMP), glutathione, nucleotides, such as inosine monophosphate, disodium inosinate, xanthosine monophosphate, guanylate monophosphate, alapyridaine (N-(1 -carboxyethyl)-6-(hydroxymethyl)pyridinium-3-ol inner salt, sugar beet extract (alcoholic extract), sugarcane leaf essence (alcoholic extract), curculin, strogin, mabinlin, gymnemic acid, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to G-protein coupled receptors (T2Rs and TIRs) and taste potentiator compositions that impart kokumi, as disclosed in U.S. Patent No. 5,679,397 to Kuroda et al.. "Kokumi" refers to materials that impart "mouthfulness" and "good body".

Sweetener potentiators, which are a type of taste potentiator, enhance the taste of sweetness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridiniumbetain compounds, sugar beet extract, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and TIRs) and combinations thereof.

Additional examples of potentiators for the enhancement of salt taste include acidic peptides, such as those disclosed in U.S. Patent No. 6,974,597. Acidic peptides include peptides having a larger number of acidic amino acids, such as aspartic acid and glutamic acid, than basic amino acids, such as lysine, arginine and histidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn protein (e.g., zein and gluten meal), soybean protein isolate), animal proteins (e.g., milk proteins such as milk casein and milk whey protein, muscle proteins such as meat protein and fish meat protein, egg white protein and collagen), and microbial proteins (e.g., microbial cell protein and polypeptides produced by microorganisms).

The chewable confectionery product also may include sensates in the coating and/or the core of the product. Sensates may include warming, cooling and tingling agents. Sensates maybe present in amounts of about 0.001% to about 1.5% by weight of the product. In some embodiments, sensates maybe present in amounts of about 0.03% to about 0.2% by weight.

Compounds that provide a cooling sensation may include physiological cooling agents. A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-carboxamide (WS-3), isopulegol, 3-(1-menthoxy)propane-1,2-diol, 3- (1-menthoxy)-2-methylpropane-1,2-diol, p-menthane-2,3-diol, p-menthane-3,8-diol, 6- isopropyl-9-methyl-1,4-dioxaspiro[4,5]decane-2-methanol, menthyl succinate and its alkaline earth metal salts, trimethylcyclohexanol, N-ethyl-2-isopropyl-5- methylcyclohexanecarboxamide, Japanese mint oil, peppermint oil, 3-(1-menthoxy)ethan-1- ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1 - methylethyl)-butanamide, n-ethyl-t-2-c-6 nonadienamide, N,N-dimethyl menthyl succinamide, substituted p-menthanes, substituted p-menthane-carboxamides, 2-isopropanyl- 5-methylcyclohexanol (from Hisamitsu Pharmaceuticals, hereinafter "isopregol"); menthone glycerol ketals (FEMA 3807, trade name FRESCOLAT® type MGA); 3-1-menthoxypropane- 1,2-diol (from Takasago, FEMA 3784); and menthyl lactate; (from Haarman & Reimer, FEMA 3748, trade name FRESCOLAT(R) type ML), WS-30, WS-14, Eucalyptus extract (p- Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P- menthane-3-carboxylic acid glycerol ester, Methyl-2-isopryl-bicyclo (2.2.1), Heptane-2- carboxamide; and Menthol methyl ether, and menthyl pyrrolidone carboxylate among others. These and other suitable cooling agents are further described in the following U.S. patents: U.S. 4,230,688; 4,032,661; 4,459,425; 4,136,163; 5,266,592; 6,627,233.

Warming agents may be selected from a wide variety of compounds known to provide the sensory signal of warming to the individual user. These compounds offer the perceived sensation of warmth, particularly in the oral cavity, and often enhance the perception of flavors, sweeteners and other organoleptic components. Useful warming agents include those having at least one allyl vinyl component, which may bind to oral receptors. Examples of suitable warming agents include, but are not limited to: vanillyl alcohol n-butylether (TK-1000, supplied by Takasago Perfumery Company Ltd., Tokyo, Japan); vanillyl alcohol n-propylether; vanillyl alcohol isopropylether; vanillyl alcohol isobutylether; vanillyl alcohol n-aminoether; vanillyl alcohol isoamylether; vanillyl alcohol n-hexylether; vanillyl alcohol methylether; vanillyl alcohol ethylether; gingerol; shogaol; paradol; zingerone; capsaicin; dihydrocapsaicin; nordihydrocapsaicin; homocapsaicin; homodihydrocapsaicin; ethanol; isopropyl alcohol; iso-amylalcohol; benzyl alcohol; glycerine; chloroform; eugenol; cinnamon oil; cinnamic aldehyde; phosphate derivatives thereof; and combinations thereof.

Tingling agents may provide a tingling, stinging or numbing sensation to the user. Tingling agents include, but are not limited to: Jambu Oleoresin or para cress (Spilanthes sp.). In which the active ingredient is Spilanthol; Japanese pepper extract (Zanthoxylum peperitum). Including the ingredients known as Saanshool-I, Saanshool-II and Sanshoamide; black pepper extract (piper nigrum). Including the active ingredients chavicine and pipeline; Echinacea extract; Northern Prickly Ash extract; and red pepper oleoresin. Tingling agents are described in U.S. Patent No. 6,780,443 to Nakatsu et al., U.S. Patent No. 5,407,665 to McLaughlin et al., U.S. Patent No. 6,159,509 to Johnson et al. and U.S. Patent No. 5,545,424 to Nakatsu et al..

In some embodiments, the confectionery product also may include oral care actives in the coating and/or the core of the product. Oral care actives which may be used include those actives known to the skilled artisan, such as, but not limited to, surfactants, breath freshening agents, anti-microbial agents, antibacterial agents, anti-calculus agents, anti-plaque agents, oral malodor control agents, fluoride compounds, quaternary ammonium compounds and combinations thereof.

Suitable surfactants include, but are not limited to, salts of fatty acids selected from the group consisting of C8-C24, palmitoleic acid, oleic acid, eleosteric acid, butyric acid, caproic acid, caprylic acid, capric acid, lauric acid, myristic acid, palmitic acid, stearic acid, ricinoleic acid, arachidic acid, behenic acid, lignoceric acid, cerotic acid, sulfated butyl oleate, medium and long chain fatty acid esters, sodium oleate, salts of furnaric acid, <*> potassium glomate, organic acid esters of mono- and diglycerides, stearyl monoglyceridyl citrate, succistearin, dioctyl sodium sulfosuccinate, glycerol tristearate, lecithin, hydroxylated lecithin, sodium lauryl sulfate, acetylated monoglycerides, succinylated monoglycerides, monoglyceride citrate, ethoxylated mono- and diglycerides, sorbitan monostearate, calcium stearyl-2-lactylate, sodium stearyl lactylate, lactylated fatty acid esters of glycerol and propylene glycerol, glycerol-lactoesters OfC8-C24 fatty acids, polyglycerol esters Of C8-C24 fatty acids, propylene glycol alginate, sucrose C8-C24 fatty acid esters, diacetyl tartaric and citric acid esters of mono- and diglycerides, triacetin, sarcosinate surfactants, isethionate surfactants, tautate surfactants, pluronics, polyethylene oxide condensates of alkyl phenols, products derived from the condensation of ethylene oxide with the reaction product of propylene oxide and ethylene diamine, ethylene oxide condensates of aliphatic alcohols, long chain tertiary amine oxides, long chain tertiary phosphine oxides, long chain dialkyl sulfoxides, and combinations thereof.

Suitable antibacterial agents include, but are not limited to, chlorhexidine, alexidine, quaternary ammonium salts, benzethonium chloride, cetyl pyridinium chloride, 2,4,4'-trichloro-2'-hydroxy-diphenyl ether (triclosan) and combinations thereof.

Suitable fluoride compounds include, but are not limited to, sodium fluoride, sodium monofluorophosphate, stannous fluoride and combinations thereof.

Suitable anti-calculus agents include, but are not limited to, pyrophosphates, triphosphates, polyphosphates, polyphosphonates, dialkali metal pyrophosphate salt, tetra alkali polyphosphate salt, tetrasodium pyrophosphate, tetrapotassium pyrophosphate, sodium tripolyphosphate and combinations thereof.

Suitable anti-microbial agents include, but are not limited to, cetylpyridinium chloride, zinc compounds, copper compounds and combinations thereof.

Other oral care actives known to those skilled in the art are considered well within the scope of the present invention.

Some embodiments also may include a lubricant in the core of the confectionery product. Lubricants may assist in processing the confectionery composition into pressed tablets. More specifically, lubricants conventionally are used to prevent excess wear on dies and punches in tableting manufacture. Lubricants may be useful immediately after compression of the tablet within the die to reduce friction between the tablet and inner die wall.

The lubricant may be added separately or it may be included with the bulk sweetener, as in some commercially available tableting powders. Examples of suitable lubricants include: metallic stearates, particularly magnesium stearate; fatty acids; hydrogenated vegetable oil; partially hydrogenated vegetable oils; animal fats; polyethylene glycols; polyoxyethylene monostearate; talc; silicon dioxide; and combinations thereof. Lubricants may be present in amounts of about 0.1% to about 5% by weight of the core.

In some embodiments, other materials may be added to the coating to achieve desired properties. These materials may include without limitations, cellulosics such as carboxymethyl cellulose, gelatin, xanthan gum, gum arabic and polyvinyl alcohol (PVA).

The coating also may include a pre-coating, which may be added to the individual cores prior to the coating. The pre-coating may include an application of polyvinyl alcohol (PVA). This may be applied as a solution of PVA in a solvent, such as ethyl alcohol. The PVA application may be approximately 3% to 4% by weight of the total coating or about 1% of the total weight of the confectionery product (including a tablet core and coating).

A variety of traditional ingredients also may be included in the coating and/or core of the confectionery products in effective amounts such as coloring agents, antioxidants, preservatives, and the like. Coloring agents may be used in amounts effective to produce the desired color. The coloring agents may include pigments which may be incorporated in amounts up to about 10%, by weight of the composition. For example, titanium dioxide may be incorporated in amounts up to about 8%, and preferably less than about 5%, by weight of the composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4- (N-ethyl-p-sulfoniumbenzylamino) diphenylmethylene]-[1-(N-ethyl -N-p-sulfoniumbenzyl)- delta-2,5-cyclohexadieneimine]. A full recitation of all F.D.& C. colorants and their corresponding chemical structures may be found in the Kirk-Othmer Encyclopedia of Chemical Technology, 3rd Edition. In volume 5 at pages 857-884, which text is incorporated herein by reference.

The pressed tablet then may be coated with a coating which may include a sugarless bulk sweetener and/or a bulk sugar sweetener, an intense sweetener, a first flavor and a lubricant, each as described above. The coating may include a sugarless bulk sweetener, an intense sweetener, a coloring agent and a second flavor, which is different from the first flavor, each as described above. The coating may also contain a third flavor. The first, second and third flavors may be different from one another and may be selected from fruit, cinnamon and mint flavors.

### Methods of Preparing and Using Chewable Confectionery Products

Some embodiments are directed to methods of preparing confectionery products, particularly pressed tablets surrounded by a coating. In accordance with such methods, a particulate bulk sweetener is provided. The particulate bulk sweetener may be in the form of a powder. The particulate bulk sweetener may be mixed with a first, or core, flavor. It may be desirable to mix the particulate bulk sweetener and flavor until a homogenous mix is achieved. A homogeneous mixture may provide a pressed tablet of similar homogenous make-up. Conventional mixing apparatus known to those skilled in the art may be used.

Additional components, such as intense sweeteners, sensates, oral care actives, and coloring agents, among others, also may be added. Once the components are blended in, the mixture may be passed through a screen of desired mesh size. Other components, such as lubricants, may be added and the batch may be further mixed. It may be desirable to mix until the batch is a homogenous powder. The batch then may be punched or pressed into tablets on a conventional tableting machine, such as a single stroke tablet press or a multi- head, rotary type tablet press.

The pressed tablet then may be coated with a coating, as described above. The coating may be applied in a conventional manner by successive applications of a coating solution, with drying in between each coat. In some embodiments, the tablet cores may be placed into a standard batch coating mixer. The coating material may be heated to about 70-100[deg.]C before application. The coating material may be sprayed onto the cores as they are tumbled and rotated in the mixer. Conditioned air may be circulated or forced into the mixer to dry each of the successive coating layers on the formed products. Multiple layers of the coating material may be applied on the cores in this manner to form a coating thereon. As the coating dries it usually becomes opaque and is usually white, though other colorants may be added. A coating can be further coated with a polishing agent, such as wax. The coating can further include colored flakes or speckles.

The coating material may be applied to the cores by any method known in the art including the method described above.

Some embodiments are directed to methods of providing a sequential flavor release in the oral cavity of an individual. In accordance therewith, a confectionery product, as described above, is provided. The confectionery product may be applied into the oral cavity of the individual. As the individual consumes the product, the coating dissolves and releases the coating flavor or flavors into the oral cavity. The individual then consumes the core of the product, thereby sequentially releasing the different core flavor into the oral cavity of the individual.

The features and advantages of the present invention are more fully shown by the following examples which are provided for purposes of illustration, and are not to be construed as limiting the invention in any way.

### EXAMPLES

**Table 1- Tablet Core Compositions**

| **Component** | **Example 1** | **Example 2** | **Example 3** | **Example 4** |
|---|---|---|---|---|
| Compressible Sugar(s) | 85%-99% w/w | | 85% - 99% w/w | |
| Compressible Polyol(s) | | 85%- 99% w/w | | 85% - 99% w/w |
| Liquid Flavor | 0.05% - 1.5% w/w | 0.05%.1.5% w/w | 0.05%-1.5% w/w | 0.05% - 1.5% w/w |
| Dry Flavor | 0.1% - 10.0% w/w | 0.1% - 10.0% w/w | 0.1% - 10.0% w/w | 0.1%- 10-0% w/w |
| Active Ingredient | 0.05%-1.2%w/w | 0.05% - 1.2% w/w | 0.05% - 1.2% w/w | 0.05% - 1.2% w/w |
| Magnesium Stearate | 0.1% - 2.0% w/w | 0.1% - 2,0% w/w | 0.1% - 2.0% w/w | 0.1% - 2.0% w/w |
| High Intensity Sweetener | 0.0001% - 3.0% w/w | | | 0.0001% - 3,0% w/w |

**Table 2 - Tablet Coating Compositions**

| **Component** | **Example 10** | **Example 20** | **Example 30** | **Example 40** |
|---|---|---|---|---|
| Sugar(s) | 50% - 75% w/w | | 50% - 75% w/w | |
| Polyol(s) | | 50% - 75% w/w | | 50% - 75% w/w |
| Colorant(s) | 0.1% - 5.0% w/w | 0.1% - 5.0% w/w | 0.1%-5.0% w/w | 0.1% - 5.0% w/w |
| Acid(s) | 0.5% - 5.0% w/w | | | 0.5% - 5.0% w/w |
| Gum Arabic | 0.5% - 10.0% w/w | 0.5% - 10.0% w/w | 0.5% - 10.0% w/w | 0.5%-10.0% w/w |
| High Intensity Sweetener | 0.0001%-3.0% w/w | 0.0001% - 3.0% w/w | | |
| Water | q.s. | q.s. | q.s. | q.s. |

A sugared pressed tablet core is prepared according to the formulations in Table 1 above.

The sugar(s) and/or the polyol(s) are blended together with the remaining ingredients in a suitable mixer such as a blender and mixed until homogeneous and a desirable powdered consistency is achieved. The batch is then fed into the compression apparatus and compressed into tablet cores.

The pressed tablet cores then are coated to provide a coating thereon. The cores are transferred into a standard batch coating pan. In a separate mixing vessel, the coating solution is prepared by mixing together the ingredients as shown in Table 2 above and warming the solution to 70[deg.]C to 100[deg.]C. In other embodiments, the solution may be warmed to a temperature of about 80[deg.]C to about 90<deg>C. The pan is set to rotate while the coating solution is added to the mixer as the cores rotate therein. Air is introduced into the mixer until the product is dry. Multiple layers may be applied in this manner until a desired amount is applied.

Once a desired amount of coating is applied, a first portion of liquid flavor is added to the mixer. Subsequently, a second portion of the same or different liquid flavor may be added. The liquid flavor(s) may be different from the flavor contained in the pressed tablet cores. Additionally, flavor(s), acid(s), and/or colorant(s) may be added as dry charges which are applied to the exterior of the confection in between applications of coating solution.

The texture of the coating can be manipulating by manipulating the extent of drying for the layers. More complete drying can result in a harder and crunchier/crispier coating. Less complete drying can result in a softer, less crunchy coating.

Subsequently, the entire batch of coated cores may be transferred to a polishing pan. Wax can be added to the polishing pan and applied to the cores for about 20-30 minutes.

The final coated confection can weigh about 0.20 g per individual piece (0.10 g coating and 0.1 g core). The tablet core can have a hardness of at least about 25 KPU.

## Claims

1. A chewable confectionery product comprising: (a) a pressed dissolvable tablet core or a chewable candy core, wherein said core comprises a first flavour; and (b) a coating surrounding said core, said coating being provided by applying a coating material to said core, followed by drying, the coating comprising a second flavor, wherein said first flavor is different from said second flavour, **characterised in that** the core and the coating comprise different hardness and different density levels.

2. The product of claim 1, wherein said core comprises at least one bulk sweetener and said bulk sweetener is particulate.

3. The product of claim 1, wherein said core or said coating comprises a bulk sugar sweetener and/or a sugarless bulk sweetener.

4. The product of claim 3, wherein the core and the coating comprises a food-grade acid.

5. The product of claim 1, wherein said first flavor comprises a fruit flavor and said second flavour comprises a mint flavour, or said first flavour comprises a mint flavour and said second flavour comprises a fruit flavour.

6. The product of claim 1, wherein said core or said coating further comprises a sensate selected from the group consisting of cooling agents, warming agents, tingling agents and combinations thereof.

7. The product of claim 1, wherein said first flavour is a dominant flavour as compared to said second flavour or said second flavour is a dominant flavour as compared to said first flavour.

8. The product of claim 1, wherein said first and said second flavours combine in the mouth to provide an enhanced perception of flavour extension or one or both of said flavours.

9. The product of claim 1, wherein the initial flavour impact is one of said first flavour, said second flavour or a combination of both flavours.

10. The product of claim 1, wherein said core or said coating further comprises an oral care active selected from the group consisting of surfactants, breath freshening agents; anti-microbial agents; antibacterial agents; anti-calculus agents; anti-plaque agents; oral malodour control agents; fluoride compounds; quaternary ammonium compounds; and combinations thereof.

11. The product of claim 1, wherein said coating comprises about 5% to about 95% by weight of said product.

12. The product of claim 1, wherein said core comprises about 5% to about 95% by weight of said product.

13. The product of claim 1, wherein said core has a moisture content of less than about 1%.

14. The product of claim 1, wherein said product has a weight of about 0.2g to about 6g.

15. The product of any preceding claim, wherein said coating comprises a third flavour, wherein said first flavour is different from said second flavour and said third flavour.

16. The product of claim 1, wherein the core is substantially water-soluble.

17. A sequential flavour delivery system comprising: (a) a pressed dissolvable tablet core or chewable candy core, said core comprising: (i) at least one sugarless bulk sweetener; (ii) at least one intense sweetener; (iii) a first flavour selected from the group consisting of fruit, cinnamon and mint flavours; and (iv) a lubricant; and (b) a coating surrounding said pressed dissolvable tablet core or chewable candy core, said coating being provided by applying a coating material to the core followed by drying the coating and said coating comprising: (i) at least one sugarless bulk sweetener; (ii) at least one intense sweetener; (iii) a colouring agent; and (iv) a second flavour selected from the group consisting of fruit, cinnamon and mint flavours, wherein said first flavour is different from said second flavour, **characterised in that** the core and the coating comprise different hardness and different density levels.

18. The delivery system of claim 17, wherein said core has a moisture content of less than 1%.

19. A method of providing a sequential flavour release in the oral cavity of an individual, comprising the steps of: (a) providing a confectionery product comprising: (i) a pressed dissolvable core comprising a first flavour; and (ii) a coating surrounding said pressed dissolvable core, said coating being provided by applying a coating material to the core followed by drying the coating and said coating comprising a second flavour, wherein said first flavour is different from said second flavour, **characterised in that** the core and the coating comprise different hardness and different density levels; (b) applying said product into the oral cavity of the individual; (c) allowing said coating to dissolve and release said second flavour into the oral cavity of the individual; and (d) subsequently allowing said core to dissolve and release said first flavour into the oral cavity of the individual.

20. A method of preparing a chewable confectionery product, comprising the steps of: (a) providing a particulate bulk sweetener; (b) mixing said particulate bulk sweetener with a first flavour to a mixture; (c) punching or pressing said mixture to form a pressed tablet core; and (d) applying one or more layers of a coating material onto said tablet core, wherein said coating material comprises a second flavour, wherein said first flavour is different from said second flavour, **characterised in that** the core and the coating comprise different hardness and different density levels.

21. The method of claim 20, wherein the step of mixing said particulate bulk sweetener with a first flavour further comprises mixing until a homogenous mixture is achieved.

22. The method of claim 20, further comprising the step of adding a food-grade lubricant to said mixture.

23. The method of claim 22, wherein said food-grade lubricant is present in amounts of about 0.1% to about 5% by weight of said tablet core.

24. The method of claim 20, further comprising the step of heating said coating material of step (d) to a temperature of about 80°C to about 90°C prior to application onto said tablet core.

25. The method of claim 20, further comprising the step of applying a polishing agent to the coated product.

## Patentansprüche

1. Kaubares Süßwarenprodukt, umfassend: (a) einen gepressten, löslichen Tablettenkern oder einen kaubaren Bonbonkern, wobei der Kern ein erstes Aroma umfasst; und (b) eine den Kern umgebende Beschichtung, wobei die Beschichtung bereitgestellt wird, indem ein Beschichtungsmaterial auf den Kern aufgebracht wird und darauf ein Trocknungsvorgang folgt, wobei die Beschichtung ein zweites Aroma umfasst, wobei das erste Aroma sich von dem zweiten Aroma unterscheidet, **dadurch gekennzeichnet, dass** der Kern und die Beschichtung unterschiedliche Härte und unterschiedliche Dichtewerte aufweisen.

2. Produkt nach Anspruch 1, wobei der Kern zumindest ein körpergebendes Süßungsmittel enthält und dieses körpergebende Süßungsmittel partikelförmig ist.

3. Produkt nach Anspruch 1, wobei der Kern oder die Beschichtung ein zuckerhaltiges körpergebendes Süßungsmittel und/oder ein zuckerfreies körpergebendes Süßungsmittel umfasst.

4. Produkt nach Anspruch 3, wobei der Kern und die Beschichtung eine Säure in Lebensmittelqualität umfassen.

5. Produkt nach Anspruch 1, wobei das erste Aroma ein Fruchtaroma umfasst und das zweite Aroma ein Minzaroma umfasst, oder das erste Aroma ein Minzaroma umfasst und das zweite Aroma ein Fruchtaroma umfasst.

6. Produkt nach Anspruch 1, wobei der Kern oder die Beschichtung des Weiteren einen eine Empfindung auslösenden Stoff ausgewählt aus der Gruppe bestehend aus kühlenden Wirkstoffen, wärmenden Wirkstoffen, prickelnden Wirkstoffen und Kombinationen daraus umfasst.

7. Produkt nach Anspruch 1, wobei das erste Aroma ein dominantes Aroma im Vergleich zu dem zweiten Aroma darstellt oder das zweite Aroma ein dominantes Aroma im Vergleich zum ersten Aroma darstellt.

8. Produkt nach Anspruch 1, wobei das erste und das zweite Aroma sich im Mund vereinigen, um eine verbesserte Wahrnehmung oder eine Geschmackserweiterung eines oder beider Aromen bereitzustellen.

9. Produkt nach Anspruch 1, wobei der anfängliche Geschmackseindruck derjenige des ersten Aromas, des zweiten Aromas oder einer Kombination der beiden Aromen ist.

10. Produkt nach Anspruch 1, wobei der Kern oder die Beschichtung des Weiteren einen Mundpflegestoff ausgewählt aus der Gruppe bestehend aus oberflächenaktiven Stoffen; atemerfrischenden Wirkstoffen; antimikrobiellen Wirkstoffen; antibakteriellen Wirkstoffen; Wirkstoffen gegen Zahnstein; Wirkstoffen gegen Plaque; Wirkstoffe zur Kontrolle von Mundgeruch; Fluoridverbindungen; quaternäre Ammoniumverbindungen; und Kombinationen daraus umfassen.

11. Produkt nach Anspruch 1, wobei die Beschichtung etwa 5 Gew.-% bis etwa 95 Gew.-% des Produkts umfasst.

12. Produkt nach Anspruch 1, wobei der Kern etwa 5 Gew.-% bis etwa 95 Gew.-% des Produkts umfasst.

13. Produkt nach Anspruch 1, wobei der Kern einen Feuchtigkeitsgehalt von weniger als etwa 1 % aufweist.

14. Produkt nach Anspruch 1, wobei das Produkt ein Gewicht von etwa 0,2 g bis etwa 6 g aufweist.

15. Produkt nach einem der vorhergehenden Ansprüche, wobei die Beschichtung ein drittes Aroma umfasst, wobei das erste Aroma sich von dem zweiten Aroma und von dem dritten Aroma unterscheidet.

16. Produkt nach Anspruch 1, wobei der Kern im Wesentlichen wasserlöslich ist.

17. System zur sequentiellen Freisetzung von Aroma, umfassend: (a) einen gepressten, löslichen Tablettenkern oder einen kaubaren Bonbonkern, wobei der Kern umfasst: (i) zumindest ein zuckerfreies körpergebendes Süßungsmittel; (ii) zumindest einen Intensivsüßstoff; (iii) ein erstes Aroma ausgewählt aus der Gruppe bestehend aus Frucht-, Zimt- und Minzaromen; und (iv) ein Gleitmittel; und (b) eine den gepressten, löslichen Tabletten- oder kaubaren Bonbonkern umgebende Beschichtung, wobei die Beschichtung bereitgestellt wird, indem ein Beschichtungsmaterial auf den Kern aufgebracht wird und die Beschichtung in der Folge getrocknet wird, und wobei die Beschichtung umfasst: (i) zumindest ein zuckerfreies körpergebendes Süßungsmittel; (ii) zumindest einen Intensivsüßstoff; (iii) einen Farbstoff; und (iv) ein zweites Aroma ausgewählt aus der Gruppe bestehend aus Frucht-, Zimt- und Minzaromen, wobei das erste Aroma sich von dem zweiten Aroma unterscheidet, **dadurch gekennzeichnet, dass** der Kern und die Beschichtung unterschiedliche Härte und unterschiedliche Dichtewerte aufweisen.

18. Freisetzungssystem nach Anspruch 17, wobei der Kern einen Feuchtigkeitsgehalt von weniger als 1 % aufweist.

19. Verfahren zur Bereitstellung einer sequentiellen Freisetzung von Aroma in der Mundhöhle einer Person, umfassend die Schritte, dass: (a) ein Süßwarenprodukfi bereitgestellt wird, welches umfasst: (i) einen gepressten, löslichen, ein erstes Aroma umfassenden Kern; und (ii) eine den gepressten, löslichen Kern umgebende Beschichtung, wobei die Beschichtung bereitgestellt wird, indem ein Beschichtungsmaterial auf den Kern aufgebracht und die Beschichtung in der Folge getrocknet wird, und wobei die Beschichtung ein zweites Aroma umfasst, wobei das erste Aroma sich von dem zweiten Aroma unterscheidet, **dadurch gekennzeichnet, dass** der Kern und die Beschichtung unterschiedliche Härte und unterschiedliche Dichtewerte aufweisen; (b) das Produkt in die Mundhöhle der Person eingebracht wird; (c) die Beschichtung sich auflösen und das zweite Aroma in die Mundhöhle der Person freigesetzt werden kann; und (d) der Kern sich in der Folge auflösen und das erste Aroma in die Mundhöhle der Person freigesetzt werden kann.

20. Verfahren zur Herstellung eines kaubaren Süßwarenprodukts, umfassend die Schritte, dass: (a) ein partikelförmiges körpergebendes Süßungsmittel bereitgestellt wird; (b) das partikelförmige körpergebende Süßungsmittel mit einem ersten Aroma gemischt wird, um ein Gemisch zu erhalten; (c) das Gemisch gestoßen oder verpresst wird, um einen gepressten Tablettenkern zu bilden; und (d) eine oder mehrere Schichten eines Beschichtungsmaterials auf den Tablettenkern aufgebracht werden, wobei das Beschichtungsmaterial ein zweites Aroma umfasst, wobei das erste Aroma sich von dem zweiten Aroma unterscheidet, **dadurch gekennzeichnet, dass** der Kern und die Beschichtung unterschiedliche Härte und unterschiedliche Dichtewerte aufweisen.

21. Verfahren nach Anspruch 20, wobei der Schritt des Mischens des partikelförmigen körpergebenden Süßungsmittels mit einem ersten Aroma des Weiteren das Mischen umfasst, bis ein homogenes Gemisch erhalten wird.

22. Verfahren nach Anspruch 20, des Weiteren umfassend den Schritt, dass ein Gleitmittel in Lebensmittelqualität zu dem Gemisch zugegeben wird.

23. Verfahren nach Anspruch 22, wobei das Gleitmittel in Lebensmittelqualität in Mengen von etwa 0,1 Gew.-% bis etwa 5 Gew.-% des Tablettenkerns vorliegt.

24. Verfahren nach Anspruch 20, des Weiteren umfassend den Schritt, dass das Beschichtungsmaterial von Schritt (d) auf eine Temperatur von etwa 80 °C bis etwa 90 °C erwärmt wird, bevor es auf den Tablettenkern aufgebracht wird.

25. Verfahren nach Anspruch 20, des Weiteren umfassend den Schritt, dass ein Poliermittel auf das beschichtete Produkt aufgebracht wird.

## Revendications

1. Produit de confiserie à mâcher comprenant : (a) un coeur de tablette comprimé soluble ou un coeur de bonbon à mâcher, dans lequel ledit coeur comprend un premier arôme ; et (b) un enrobage entourant ledit coeur, ledit enrobage étant fourni par application d'une matière d'enrobage sur ledit coeur, suivie par un séchage, l'enrobage comprenant un deuxième arôme, dans lequel ledit premier arôme est différent dudit deuxième arôme, **caractérisé en ce que** le coeur et l'enrobage comprennent des duretés différentes et des niveaux de densité différents.

2. Produit selon la revendication 1, dans lequel ledit coeur comprend au moins un édulcorant de charge et ledit édulcorant de charge est particulaire.

3. Produit selon la revendication 1, dans lequel ledit coeur ou ledit enrobage comprend un édulcorant de sucre de charge et/ou un édulcorant de charge sans sucre.

4. Produit selon la revendication 3, dans lequel le coeur et l'enrobage comprennent un acide comestible.

5. Produit selon la revendication 1, dans lequel ledit premier arôme comprend un arôme de fruit et ledit deuxième arôme comprend un arôme de menthe, ou ledit premier arôme comprend un arôme de menthe et ledit deuxième arôme comprend un arôme de fruit.

6. Produit selon la revendication 1, dans lequel ledit coeur ou ledit enrobage comprend en outre un agent de sensation choisi parmi le groupe comprenant les agents rafraîchissants, les agents chauffants, les agents de picotement et leurs combinaisons.

7. Produit selon la revendication 1, dans lequel ledit premier arôme est un arôme dominant par rapport audit deuxième arôme ou ledit deuxième arôme est un arôme dominant par rapport audit premier arôme.

8. Produit selon la revendication 1, dans lequel ledit premier et ledit deuxième arômes se mélangent dans la bouche pour offrir une perception améliorée de l'allongement du goût ou d'un ou des deux desdits arômes.

9. Produit selon la revendication 1, dans lequel l'impact initial de l'arôme est l'un dudit premier arôme, dudit deuxième arôme ou d'une combinaison des deux arômes.

10. Produit selon la revendication 1, dans lequel ledit coeur ou ledit enrobage comprend en outre un agent actif d'hygiène buccale choisi parmi le groupe comprenant les tensioactifs, les agents rafraîchissant l'haleine ; les agents antimicrobiens ; les agents antibactériens ; les agents anti-calcul ; les agents anti-plaque ; les agents de contrôle des mauvaises odeurs buccales ; les composés fluorés ; les composés d'ammonium quaternaire ; et leurs combinaisons.

11. Produit selon la revendication 1, dans lequel ledit enrobage comprend d'environ 5 % à environ 95 % en poids dudit produit.

12. Produit selon la revendication 1, dans lequel ledit coeur comprend d'environ 5 % à environ 95 % en poids dudit produit.

13. Produit selon la revendication 1, dans lequel ledit coeur présente une teneur en eau inférieure à environ 1 %.

14. Produit selon la revendication 1, dans lequel ledit produit présente un poids allant d'environ 0,2 g à environ 6 g.

15. Produit selon l'une quelconque des revendications précédentes, dans lequel ledit enrobage comprend un troisième arôme, dans lequel ledit premier arôme est différent dudit deuxième arôme et dudit troisième arôme.

16. Produit selon la revendication 1, dans lequel le coeur est sensiblement hydrosoluble.

17. Système de libération séquentielle d'arôme comprenant : (a) un coeur de tablette comprimé soluble ou un coeur de bonbon à mâcher, ledit coeur comprenant : (i) au moins un édulcorant de charge sans sucre ; (ii) au moins un édulcorant intense ; (iii) un premier arôme choisi parmi le groupe comprenant les arômes de fruit, de cannelle et de menthe ; et (iv) un lubrifiant ; et (b) un enrobage entourant ledit coeur de tablette comprimé soluble ou coeur de bonbon à mâcher, ledit enrobage étant fourni par application d'une matière d'enrobage sur ledit coeur, suivie du séchage de l'enrobage et ledit enrobage comprenant : (i) au moins un édulcorant de charge sans sucre ; (ii) au moins un édulcorant intense ; (iii) un agent colorant ; et (iv) un deuxième arôme choisi parmi le groupe comprenant les arômes de fruit, de cannelle et de menthe, dans lequel ledit premier arôme est différent dudit deuxième arôme, **caractérisé en ce que** le coeur et l'enrobage comprennent des duretés différentes et des niveaux de densité différents.

18. Système de libération selon la revendication 17, dans lequel ledit coeur présente une teneur en eau inférieure à 1 %.

19. Procédé fournissant une libération d'arôme séquentielle dans la cavité buccale d'un individu, comprenant les étapes consistant à : (a) fournir un produit de confiserie comprenant : (i) un coeur de tablette comprimé soluble comprenant un premier arôme ; et (ii) un enrobage entourant ledit coeur comprimé soluble, ledit enrobage étant fourni par application d'une matière d'enrobage sur le coeur, suivie du séchage de l'enrobage et ledit enrobage comprenant un deuxième arôme, dans lequel ledit premier arôme étant différent dudit deuxième arôme, **caractérisé en ce que** le coeur et l'enrobage comprennent des duretés différentes et des niveaux de densité différents ; (b) appliquer ledit produit dans la cavité buccale de l'individu ; (c) laisser ledit enrobage se dissoudre et libérer ledit deuxième arôme dans la cavité buccale de l'individu ; et (d) laisser ensuite ledit coeur se dissoudre et libérer ledit premier arôme dans la cavité buccale de l'individu.

20. Procédé de préparation d'un produit de confiserie à mâcher, comprenant les étapes consistant à : (a) fournir un édulcorant de charge particulaire ; (b) mélanger ledit édulcorant de charge particulaire à un premier arôme pour former un mélange ; (c) poinçonner ou presser ledit mélange pour former un coeur de tablette comprimé ; et (d) appliquer une ou plusieurs couches d'une matière d'enrobage sur ledit coeur de tablette, dans lequel ladite matière d'enrobage comprend un deuxième arôme, dans lequel ledit premier arôme est différent dudit deuxième arôme, **caractérisé en ce que** le coeur et l'enrobage comprennent des duretés différentes et des niveaux de densité différents.

21. Procédé selon la revendication 20, dans lequel l'étape consistant à mélanger ledit édulcorant de charge particulaire à un premier arôme comprend en outre le mélange jusqu'à l'obtention d'un mélange homogène.

22. Procédé selon la revendication 20, comprenant en outre l'étape consistant à ajouter un lubrifiant comestible audit mélange.

23. Procédé selon la revendication 22, dans lequel ledit lubrifiant comestible est présent en des quantités allant d'environ 0,1 % à environ 5 % en poids dudit coeur de tablette.

24. Procédé selon la revendication 20, comprenant en outre l'étape de chauffage de ladite matière d'enrobage de l'étape (d) à une température d'environ 80 °C à environ 90 °C avant son application sur ledit coeur de tablette.

25. Procédé selon la revendication 20, comprenant en outre l'étape consistant à appliquer un agent de polissage sur le produit enrobé.
